# EUROPEAN PATENT SPECIFICATION

(11) **EP 3 380 227 B1**
(45) Date of publication and mention of the grant of the patent: **16.10.2019**
(21) Application number: 16801176.5
(22) Date of filing: 22.11.2016
(51) Int. Cl.: B01J 20/22, B01J 20/30, B01J 20/28

(54) **PROCESS FOR PREPARATION OF A MOLDING COMPOSITION AND PRODUCTION OF SHAPED BODIES CONTAINING MOF**
VERFAHREN ZUR HERSTELLUNG EINER FORMMASSEZUSAMMENSETZUNG UND HERSTELLUNG VON MOF ENTHALTENDEN FORMKÖRPERN
PROCÉDÉ DE PRÉPARATION D'UNE COMPOSITION DE MOULAGE ET PRODUCTION DE CORPS MOULÉS COMPRENANT UN MOF

(30) Priority: 27.11.2015 EP 15196727
(43) Date of publication of application: 03.10.2018
(73) Proprietor: BASF SE, 67056 Ludwigshafen am Rhein (DE)
(72) Inventor: MAURER, Stefan, 201206 Shanghai (CN); REINHARDT, Caroline, 67056 Ludwigshafen (DE); ARNOLD, Lena, 67056 Ludwigshafen (DE); HOFMANN, Claus, 67056 Ludwigshafen (DE); KOSTUR, Milan, 671056 Ludwigshafen (DE); MUELLER, Ulrich, 67056 Ludwigshafen (DE)
(74) Representative: BASF IP Association
(86) International application number: PCT/EP2016/078423
(87) International publication number: WO 2017/089344

(56) References cited:
- WO-A1-2014/191725
- US-A1- 2003 222 023
- BINGXING ZHANG ET AL: "Solvent determines the formation and properties of metal-organic frameworks", RSC ADV., vol. 5, no. 47, 1 January 2015 (2015-01-01), pages 37691-37696, XP055347829, DOI: 10.1039/C5RA02440D

## Description

The present invention relates to a process for preparation of a molding composition and for production of shaped bodies containing metal-organic framework material, the process comprising preparing a mixture and producing the molding composition, wherein an at least bidentate organic compound or and a metal salt react to a metal organic framework material.

Due to their large surface areas porous materials and in particular metal-organic framework (MOF) materials with surface areas of up to 10,000 m²/g, are of interest for applications, especially in gas storage or gas separation. For most applications, it is necessary to process pulverulent materials to compact shaped bodies. These can be handled more conveniently and especially in a safer manner. Shaped bodies allow better exploitation of volumes available in apparatuses or tanks and reduce pressure drops. Prerequisite for a successful use of shaped bodies are preliminarily a high adsorption capacity, adequate thermal and mechanical stability and high abrasion resistance. Even thermal shocks resulting from heat of adsorption released in the course of continuous adsorption/desorption cycles can be sufficient to cause fracture and splintering of the bodies in the case of the related zeolite shaped bodies as described in DE 1905019 A. Mechanical stability is indispensable, particularly for shaped bodies, which are used in vehicle tanks, exposed constantly to agitation. A high mechanical stability of the shaped bodies is important in order to avoid dust development due to abrasion in a moved tank.

A conversion by pressing a powder into the desired shape results in a compression of the porous material so that the density of that material is increased. Generally, this results in a decrease of the surface area of such a shaped material in comparison to the powder. As advantageous effects of porous material are closely linked to the surface area of the material, a surface decrease in the porous material is undesirable with regard to their adsorption, storage or other properties.

For example in case of metal-organic framework containing materials, the decrease of the surface area, e.g. by pressing, during a shape forming step is not only due to a physical reduction of the outer surface, but is also caused by the destruction of spatial structures within the metal-organic framework. This may be explained by the high pore volume resulting in a high fragility of the organic framework structure in comparison to others, like those architectures formed by zeolites.

To form shaped bodies several, which is also referred to as molding, routes exist such as briquetting by piston presses, briquetting by roller pressing, binderless briquetting, briquetting with binders, pelletizing, compounding, melting, extruding, co-extruding, spinning, deposition, foaming, spray drying, coating, granulating, in particular spray granulating or granulating according to any process known within the processing of plastics or any combination of at least two of the aforementioned methods.

Typically, the metal organic framework material is synthesized resulting in a powder, which is further processed by molding to give the shaped bodies. Before being molded, the metal organic framework powder is often filtered, washed and dried, which represents laborious and expensive process steps, especially when larger quantities are produced.

WO 2012/156436 A1 discloses a process for producing particles comprising metal organic framework compounds. Binder-free particles are obtained by gelation of a MOF gel precursor solution in a fluid immiscible with the MOF gel precursor solution or in pores of a macroporous matrix. The produced particles are present in form of dry gels such as xerogels or aerogels.

WO 2013/160683 A1 is directed to a method for preparing a metal organic framework compound comprising the steps of contacting a particulate inorganic metal compound with an organic ligand compound in the presence of a liquid, which is not a solvent for the inorganic metal compound. The produced metal organic framework compound is separated from the liquid and dried. Further, a washing of the product is described.

WO 2014/041284 A1 discloses a process for preparing a material comprising crystalline organic-inorganic hybrid material (MHOIC) which is formed with a binding formulation comprising a hydraulic binder. A powder of the crystalline organic-inorganic hybrid material is mixed with the powder of the hydraulic binder in absence of a solvent and then formed, preferably by pelletizing or granulation.

WO 2014/191725 discloses a similar process for the preparation of a metal-organic compound in a shaped form by extrusion, wherein during the step of mixing the precursors a solvent or a combination of solvents may be employed.

Zhang et al., in "RSC Advances"(2015), 5,pages 37691-37696 report on the preparation of Cu₃(BTC)₂ MOF with different mixtures of solvents, such as ethanol and water in different volume ratios.

Plaza et al., in "Separation and Purification Technology" (2012), 90, pages 109 to 119, report on the metal organic framework material Cu-benzenetricarboxylate, which is synthesized and shaped into spheres. Microwave-assisted hydrothermal synthesis is applied.

Majano et al., in "Advanced Materials" (2013), 25, pages 1052 to 1057, study the scalable roomtemperature conversion of copper(II)hydroxide into the metal organic framework material Cu-benzenetricarboxylate (HKUST-1). After synthesis, pure Cu-benzenetricarboxylate is obtained by drying of a slurry. Shaped bodies are formed by extrusion.

Crawford et al., in "Chemical Science" (2015), 6 (3), pages 1645 to 1649 and corresponding electronic supplementary material, describe a process wherein twin screw or single screw extruders are used for the continuous synthesis of various metal complexes. The solid reactants are mixed before being fed into the extruder. Exudates of Cu-benzenetricarboxylate are subsequently stirred in ethanol.

Disadvantages of the processes known in the state of the art are separated process for synthesis and molding, leading to an increased number of required process steps, the application of solvents with increased hazard potential, only poor conversion of the reactants or small specific surfaces of the resulting shaped bodies.

It is an object of the invention to provide a process for preparation of a molding composition, which can be converted with a reduced number of process steps into shaped bodies comprising metal organic framework material and providing high specific surface areas and high mechanical stability.

These objects are achieved by a process for production of shaped bodies containing metal-organic framework material, the process comprising
a) preparing a molding composition, comprising the steps
   a₁) preparing a mixture, the mixture comprising an at least bidentate organic compound or a salt thereof, a metal salt and a solvent, wherein the solvent comprises 25% to 60% by volume of an alcohol, selected from the group consisting of methanol, ethanol, n-propanol and isopropanol, and 40% to 75% by volume of water, and
   a₂) producing the molding composition, the molding composition comprising at least a metal-organic framework material and the solvent, wherein the at least bidentate organic compound or a salt thereof and the metal salt react to the metal-organic framework material and wherein the molding composition has a solid content in a range from 30% to 80% by weight, referring to the total mass of the molding composition;
b) feeding the molding composition into an extruder or an extrusion press and
c) converting the molding composition into shaped bodies, comprising at least the metal-organic framework material, by extrusion.

It is an advantage of the inventive process for preparation of a molding composition that the resulting molding composition can be directly processed by extrusion, without any further separation or purification or drying steps.

By the processes of the present invention, additional process steps, such as filtering, washing and drying between synthesis of the metal-organic framework material and formation of the shaped bodies can be avoided and therefore, a more effective overall process is possible. This is in particular advantageous in bulk scale production.

It is a further advantage of the inventive process that the amount of required solvent is reduced, resulting in a reduced amount of solvent, especially of organic solvent, which has to be disposed of after the process. Further, the overall time required for the preparation of the shaped bodies from the starting materials, which are the reactants, is significantly reduced, as well as the energy demand, as a drying step between the synthesis and the extrusion can be avoided.

Further, the specific composition of the solvent enables a satisfactory conversion with regard to the formation of the metal-organic framework material as well as high specific surface areas of the resulting shaped bodies. Moreover, satisfactory mechanical stability of the shaped bodies in terms of resistance to pressure is achieved.

By the application of a solvent comprising the alcohol, selected from the group consisting of methanol, ethanol, n-propanol and isopropanol, and water, compared to applying pure alcohol or another organic solvent, it is an advantage that the requirements for explosion avoidance are reduced.

High-porous metal-organic framework materials are known in the prior art. They are distinguished, in particular by their porosity and can frequently be supplied to applications comparable to those which are known for inorganic zeolites.

Metal-organic frameworks usually comprise an at least bidentate organic compound, which is coordinated to a metal component and together with the metal component forms the skeleton of the metal-organic framework. The metal-organic framework materials as such are described, for example, in US 5,648,508, EP-A-0 709 253, M. O'Keeffe et al., J. Sol. State Chem., 152 (2000), pages 3-20, H. Li et al., Nature 402 (1999), pages 276 seq., M. Eddaoudi et al. Topics in Catalysis 9 (1999), pages 105-111, B. Chen et al., Science 291 (2001), pages 1021-1023.

The metal component is often selected from groups Ia, IIa, IIIa, IVa to Villa and lb to Vlb of the periodic table. Particular preference is given to Mg, Ca, Sr, Ba, Sc, Y, Ln, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, TI, Si, Ge, Sn, Pb, As, Sb and Bi, where Ln represents lanthanides.

Lanthanides are La, Ce, Pr, Nd, Pm, Sm, En, Gd, Tb, Dy, Ho, Er, Tm, Yb.

As it regards the ions of these elements, particularly mentioned are Mg²⁺, Ca²⁺, Sr²⁺, Ba²⁺, Sc³⁺, Y³⁺, Ln³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ and Bi⁺.

Very particular preference is often given to Mg, Ca, Al, Y, Sc, Zr, Ti, V, Cr, Mo, Fe, Co, Cu, Ni, Zn, Ln. Greater preference is given to Mg, Zr, Ni, Al, Mo, Y, Sc, Mg, Fe, Cu and Zn. In particular, Mg, Fe, Zr, Sc, Al, Cu and Zn are preferred. Very particular mention may here be made of Mg, Zr, Al, Cu and Zn, particularly Cu, Al and Zn, especially Cu and Zn.

The term "at least bidentate organic compound" refers to an organic compound which comprises at least one functional group which is able to form at least two coordinate bonds to a given metal ion and/or to form one coordinate bond to each of two or more, preferably two, metal atoms. The at least bidentate organic compound can be used as such or in the form of a salt thereof, preferably the organic compound is used as such.

As functional groups via which the abovementioned coordinate bonds are formed, particular mention may be made by way of example of the following functional groups: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -ASO₄H, -P(SH)₃, -AS(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃, where R is, for example, preferably an alkylene group having 1, 2, 3, 4 or 5 carbon atoms, for example a methylene, ethylene, n-propylene, i-propylene, n-butylene, i-butylene, tert-butylene or n-pentylene group, or an aryl group comprising 1 or 2 aromatic rings, for example 2 C₆ rings, which may optionally be fused and may, independently of one another, be appropriately substituted by at least one substituent in each case and/or may, independently of one another, in each case comprise at least one heteroatom such as N, O and/or S. In likewise preferred embodiments, mention may be made of functional groups in which the abovementioned radical R is not present. In this respect, mention may be made of, inter alia, -CH(SH)₂, -C(SH)₃, -CH(NH₂)₂, -C(NH₂)₃, -CH(OH)₂, -C(OH)₃, -CH(CN)₂ or -C(CN)₃.

However, the functional groups can also be heteroatoms of a heterocycle. Particularly nitrogen atoms may here be mentioned.

The at least two functional groups can in principle be bound to any suitable organic compound as long as it is ensured that the organic compound bearing these functional groups is capable of forming the coordinate bond and of producing the framework.

The organic compounds comprising the at least two functional groups are preferably derived from a saturated or unsaturated aliphatic compound or an aromatic compound or a both aliphatic and aromatic compound.

The aliphatic compound or the aliphatic part of the both aliphatic and aromatic compound can be linear and/or branched and/or cyclic, with a plurality of rings per compound also being possible. The aliphatic compound or the aliphatic part of the both aliphatic and aromatic compound more preferably comprises from 1 to 15, more preferably from 1 to 14, more preferably from 1 to 13, more preferably from 1 to 12, more preferably from 1 to 11 and particularly preferably from 1 to 10, carbon atoms, for example 1, 2, 3, 4, 5, 6, 7, 8, 9 or 10 carbon atoms. Particular preference is given hereto, inter alia, methane, adamantane, acetylene, ethylene or butadiene.

The aromatic compound or the aromatic part of the both aromatic and aliphatic compound can have one or more rings, for example two, three, four or five rings, with the rings being able to be present separately from one another and/or at least two rings being able to be present in fused form. The aromatic compound or the aromatic part of the both aliphatic and aromatic compound particularly preferably has one, two or three rings, with one or two rings being particularly preferred. Furthermore, each ring of said compound can independently comprise at least one heteroatom, for example N, O, S, B, P, Si, Al, preferably N, O and/or S. The aromatic compound or the aromatic part of the both aromatic and aliphatic compound more preferably comprises one or two C₆ rings, with the two being present either separately from one another or in fused form. In particular, mention may be made of benzene, naphthalene and/or biphenyl and/or bipyridyl and/or pyridyl as aromatic compounds.

The at least bidentate organic compound is more preferably an aliphatic or aromatic, acyclic or cyclic hydrocarbon which has from 1 to 18, preferably from 1 to 10 and in particular 6 carbon atoms and additionally has exclusively 2, 3 or 4 carboxyl groups as functional groups.

The at least bidentate organic compound is preferably derived from a dicarboxylic, tricarboxylic or tetracarboxylic acid.

For example, the at least bidentate organic compound is derived from a dicarboxylic acid such as oxalic acid, succinic acid, tartaric acid, 1,4-butanedicarboxylic acid, 1,4-butenedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxlic acid, heptadecanedicarboxylic acid, acetylenedicarboxylic acid, 1,2-benzenedicarboxylic acid, 1,3-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-dicarboxylic acid, 4,4'-diamino-1,1'-biphenyl-3,3'-dicarboxylic acid, 4,4'-diaminobiphenyl-3,3'-dicarboxylic acid, benzidine-3,3'-dicarboxylic acid, 1,4-bis(phenylamino)benzene-2,5-dicarboxylic acid, 1,1'-binaphthyldicarboxylic acid, 7-chloro-8-methylquinoline-2,3-dicarboxylic acid, 1-anilinoanthraquinone-2,4'-dicarboxylic acid, polytetrahydrofuran 250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro)phenylpyrazoline-4,5-dicarboxylic acid, 1,4,5,6,7,7-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidene-4,5-cis-dicarboxylic acid, 2,2'-biquinoline-4,4'-dicarboxylic acid, pyridine-3,4-dicarboxylic acid, 3,6,9-trioxaundecanedicarboxylic acid, hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diamino(diphenyl ether)diimidedicarboxylic acid, 4,4'- diaminodi-phenylmethanediimidedicarboxylic acid, 4,4'-diamino(diphenyl sulfone) diimidedicarboxylic acid, 1,4-naphthalenedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2',3'-diphenyl-p-terphenyl-4,4"-dicarboxylic acid, (diphenyl ether)-4,4'-dicarboxylic acid, imidazole-4,5-dicarboxylic acid, 4(1H)-oxo-thiochromene-2,8-dicarboxylic acid, 5-tert-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, 2,5-dihydroxy-1,4-dicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorbenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid 1,14-tetradecanedicarboxylic acid, 5,6-dehydronorbornane-2,3-dicarboxylic acid, 5-ethyl-2,3-pyridinedicarboxylic acid or camphordicarboxylic acid.

Furthermore, the at least bidentate organic compound is more preferably one of the dicarboxylic acids mentioned by way of example above as such.

The at least bidentate organic compound can, for example, be derived from a tricarboxylic acid such as 2-hydroxy-1,2,3-propanetricarboxylic acid, 7-chloro-2,3,8-quinolinetricarboxylic acid, 1,2,3-benzenetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid or aurintricarboxylic acid.

Furthermore, the at least bidentate organic compound is more preferably one of the tricarboxylic acids mentioned by way of example above as such.

Examples of an at least bidentate organic compound derived from a tetracarboxylic acid are 1,1-dioxidoperylo[1,12-BCD]thiophene-3,4,9,10-tetracarboxylic acid, perylenetetracarboxylic acids such as perylene-3,4,9,10-tetracarboxylic acid or (perylene-1,12-sulfone)-3,4,9,10-tetracarboxylic acid, butanetetracarboxylic acids such as 1,2,3,4-butanetetracarboxylic acid or meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octane-tetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydro-furantetracarboxylic acid or cyclopentanetetracarboxylic acids such as cyclopentane-1,2,3,4-tetracarboxylic acid.

Furthermore, the at least bidentate organic compound is more preferably one of the tetracarboxylic acids mentioned by way of example above as such.

Preferred monocarbocylic acids as at least bidentate compound in which a coordinate bond is formed via the carboxylic functional group are formates and mixed formates/actetates especially in form of Mg- and Li-MOFs (WO 2009/115513 A1 and WO 2010/012715 A1).

Preferred heterocycles as at least bidentate organic compound in which a coordinate bond is formed via the ring heteroatoms are the following substituted or unsubstituted ring systems:

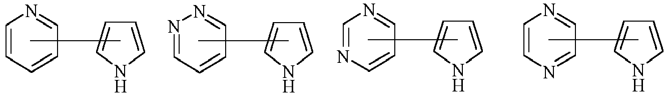

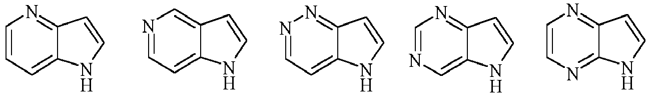

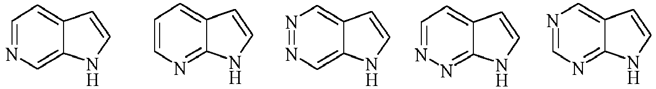

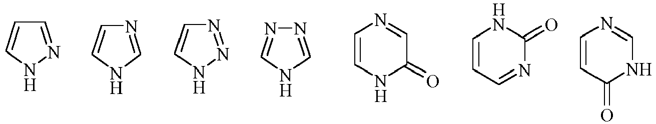

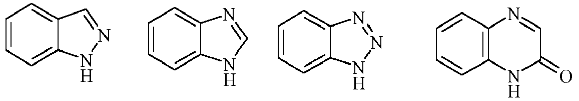

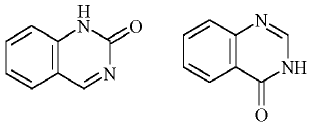

Very particular preference is given to using optionally at least monosubstituted aromatic dicarboxylic, tricarboxylic or tetracarboxylic acids which can have one, two, three, four or more rings, with each of the rings being able to comprise at least one heteroatom and two or more rings being able to comprise identical or different heteroatoms. For example preference is given to one-ring dicarboxylic acids, one-ring tricarboxylic acids, one-ring tetracarboxylic acids, two-ring dicarboxylic acids, two-ring tricarboxylic acids, two-ring tetracarboxylic acids, three-ring dicarboxylic acids, three-ring tricarboxylic acids, three-ring tetracarboxylic acids, four-ring dicarboxylic acids, four-ring tricarboxylic acids and/or four-ring tetracarboxylic acids. Suitable heteroatoms are, for example, N, O, S, B, P, and preferred heteroatoms are N, S and/or O. Suitable substituents here are, inter alia, -OH, a nitro group, an amino group or an alkyl or alkoxy group.

Particularly preferred at least bidentate organic compounds are imidazolates such as 2-methyl-imidazolate, acetylenedicarboxylic acid (ADC), camphordicarboxylic acid, fumaric acid (FUM), succinic acid, benzenedicarboxylic acids such as phthalic acid, isophthalic acid, terephthalic acid (BDC), aminoterephthalic acid, triethylenediamine (TEDA), methylglycinediacetic acid (MGDA), naphthalenedicarboxylic acids (NDC), biphenyldicarboxylic acids such as 4,4'-biphenyldicarboxylic acid (BPDC), pyrazinedicarboxylic acids such as 2,5-pyrazinedicarboxylic acid, bipyridinedicarboxylic acids such as 2,2'-bipyridinedicarboxylic acids such as 2,2'-bipyridine-5,5'-dicarboxylic acid, benzenetricarboxylic acids such as 1,2,3-benzenetricarboxylic acid, 1,2,4-benzenetricarboxylic acid or 1,3,5-benzenetricarboxylic acid (BTC, also known as trimesic acid), benzenetetracarboxylic acid, adamantanetetracarboxylic acid (ATC), adamantanediben-zoate (ADB), benzenetribenzoate (BTB), methanetetrabenzoate (MTB), adamantanetetra-benzoate or dihydroxyterephthalic acids such as 2,5-dihydroxyterephthalic acid (DHBDC), tetrahydropyrene-2,7-dicarboxylic acid (HPDC), biphenyltetracarboxylic acid (BPTC), 1,3-bis(4-pyridyl)propane (BPP).

Very particular preference is given to using, inter alia, 2-methylimidazole, 2-ethylimidazole, phthalic acid, isophthalic acid, terephthalic acid, 2,6-naphthalenedicarboxylic acid, 1,4-naphthalenedicarboxylic acid, 1,5-naphthalenedicarboxylic acid, 1,2,3-benzenetricarboxylic acid, 1,2,4-benzenetricarboxylic acid, 1,3,5-benzenetricarboxylic acid, 1,2,4,5-benzenetetracarboxylic acid, aminoterephthalic acid, triethylenediamine, fumaric acid, biphenyldicarboxylate, 1,5- and 2,6-naphthalenedicarboxylic acid, tert-butylisophthalic acid, dihydroxybenzoic acid, benzenetribenzoate, tetrahydropyrene-2,7-dicarboxylic acid, biphenyltetracarboxylic acid, 1,3-bis(4-pyridyl)propane and naphthalenedicarboxylic acids.

Apart from these at least bidentate organic compounds, the metal-organic framework can also comprise one or more monodentate ligands and/or one or more at least bidentate ligands which are not derived from a dicarboxylic, tricarboxlic or tetracarboxylic acid.

For the purposes of the present invention, the term "derived" means that the at least bidentate organic compound is present in partially or fully deprotonated form. Furthermore, the term "derived" means that the at least bidentate organic compound can have further substituents. Thus, a dicarboxylic or polycarboxylic acid can have not only the carboxylic acid function but also one or more independent substituents such as amino, hydroxyl, methoxy, halogen or methyl groups. Preference is given to no further substituent being present. For the purposes of the present invention, the term "derived" also means that the carboxylic acid function can be present as a sulfur analogue. Sulfur analogues are -C(=O)SH and its tautomer and -C(S)SH.

Even more preferably, the at least bidentate organic compound is selected from the group consisting of fumaric acid, terephthalic acid, benzene tricarboxylate, 2-methylimidazole, naphthalenedicarboxylic acids and benzene tribenzoate. Also preferred is formate as at least bidentate organic compound.

Preferably, the metal salt comprises a metal selected from the group consisting of copper, zinc and aluminum, more preferably copper and zinc and most preferably copper. In a preferred embodiment the metal salt is copper hydroxide (Cu(OH)₂), zink carbonate (ZnCO₃), basic zinc carbonate [Zn(CO₃)]₂[Zn(OH)₂]₃, aluminum sulfate Al₂(SO₄)₃, or hydrates thereof, or any metal hydroxide, particularly preferred are (Cu(OH)₂), basic zinc carbonate [Zn(CO₃)]₂[Zn(OH)₂]₃, aluminum sulfate Al₂(SO₄)₃, or hydrates thereof. Particular preference is given to (Cu(OH)₂ and [Zn(CO₃)]₂[Zn(OH)₂]₃.

The metal-organic framework is more preferably copper-1,3,5-benzenetricarboxylate, also referred to as Basolite™C300 or HKUST-1, orzinc-2-methylimidazole, also referred to as ZIF-8 or Basolite™ Z1200. Also preferred is Mg-formate (M050).

The term "and/or" combining two options means the first option or the second option or both, the first and the second option.

The pore sizes of the metal-organic framework can be adjusted by selecting suitable organic ligands and/or bidendate compounds, also called linkers. Generally, the larger the linker, the larger the pore size. Any pore size that is still supported by a metal-organic framework in the absence of a host and at temperatures of at least 200 °C is conceivable. Pore sizes ranging from 0.2 nm to 30 nm are preferred, with pore sizes ranging from 0.3 nm to 3 nm being particularly preferred.

Metal organic framework comprises pores, in particular micropores or mesopores. Micropores are defined as pores having a diameter of 2 nm or less and mesopores are defined by a diameter in the range from 2 nm to 50 nm (Pure & Appl. Chem. 57 (1985) 603-619). The presence of micropores and/or mesopores can be checked by means of sorption measurements which determine the uptake capacity of the metal organic frameworks for nitrogen at 77 Kelvin (Langmuir method) in accordance with DIN 66131:1993-07 and/or DIN 66134:1998-2.

For preparation of the molding composition, the mixture is preferably agitated in step a₁) and/or a₂).

Preferably, the preparation of the mixture is effectuated in static mixers, planetary mixers, mixers with rotating containers, pan mixers, pug mills, shearing-disk mixers, centrifugal mixers, sand mills, trough kneaders, internal mixers, mix mullers, kneaders and continuous kneaders are preferred.

In a preferred embodiment, at least step a₁) is carried out in a mix muller or a kneader. Also the production of the molding composition in step a₂) can be carried out in a mix muller or kneader.

The metal-organic framework material is synthesized in the mixture by reaction of the at least bidentate organic compound and the metal salt. Typically, the reaction start depends on the presence of the solvent.

In a preferred embodiment, the solvent comprises 28 to 58 % by volume of the alcohol, selected from the group consisting of methanol, ethanol, n-propanol and isopropanol, more preferred 30% to 55% by volume. Preferably, the alcohol is ethanol. For this alcohol concentration, increased specific surface areas of the resulting shaped bodies are achieved and it is ensured that the molding composition can be processed by extrusion. Correspondingly, this solvent composition comprises preferably 42% to 72% by volume of water, more preferably 45% to 70% by volume of water. In a most preferred embodiment, the solvent consists of 30% to 55% by volume of the alcohol, selected from the group consisting of methanol, ethanol, n-propanol and isopropanol, and 45% to 70% by volume of water.

The term "volume" for the purpose of the invention refers to the particular volume at room temperature, preferably at 20°C to 25°C, preferably 23°C.

During production of the molding composition part of the at least bidentate organic compound and part of the metal salt dissolve and react to give the solid metal-organic framework material.

The molding composition typically comprises the solvent, the metal-organic framework material and optionally unreacted at least bidentate organic compound and/or unreacted metal salt.

Preferably, the mixture and the molding composition differ from each other only by the proportion of the metal-organic framework material, the proportion of the at least bidentate organic compound and the proportion of the at least metal salt comprised in the mixture and in the molding composition, respectively.

The molding composition typically consists of a solid content and a liquid content. Preferably, the liquid comprises the solvent and optionally dissolved at least bidentate organic compound and dissolved metal salt, preferably the liquid is the solvent.

The molding composition has a solid content in a range from 30% to 80% by weight, referring to a total mass of the molding composition. Preferably, the molding composition has a solid content in the range from 40% to 60% by weight. Typically, the solid matter comprised in the molding composition comprises the metal-organic framework material, the at least bidentate organic compound, and the metal salt, preferably the solid matter consists of the metal-organic framework material, the at least bidentate organic compound and the metal salt, more preferably the solid matter is metal-organic framework material.

The defined amounts of the alcohol, selected from the group consisting of methanol, ethanol, n-propanol and isopropanol, and water as well as the ratio from the alcohol, selected from the group consisting of methanol, ethanol, n-propanol and isopropanol, to water ensure a successful agglomeration of the solid matter in the resulting shaped bodies.

The defined solid content is advantageous in order to obtain a molding composition, which can be directly processed by extrusion resulting in stable shaped bodies. The viscosity of the molding composition is essentially defined by the solid content.

In a preferred embodiment, the metal salt is copper hydroxide. Using copper hydroxide as reactant has the advantage that only water is formed as by-product.
Further, in a preferred embodiment, the at least bidentate organic compound is benzene-1,3,5-tricarboxylic acid.

The mixture can comprise binders, lubricants and/or other additional substances, preferably comprises at least one binder and/or lubricant, that stabilize the materials to be agglomerated. As to at least one optional binder, any material known to an expert to promote adhesion between the particles to be molded together can be employed.

Suitably binders, lubricants or additives are, for example, aluminum oxide or binders comprising aluminum oxide, as described, for example, in WO 94/29408, silicon dioxide, as described, for example, in EP 0 592 050 A1, mixtures of silicon dioxide and aluminum oxide, as described, for example, in WO 94/13584, clay minerals as described, for example, in JP 03-037156 A, for example montmorillonite, kaolin, bentonite, hallosite, dickite, nacrite and anauxite, alkoxysilanes as described, for example, in EP 0 102 544 B1, for example tetraalkoxysilanes such as tetramethoxysilane, tetraethoxysilane, tetrapropoxysilane, tetrabutoxysilane, or, for example, trialkoxysilanes such as trimethoxysilane, triethoxysilane, tripropoxysilane, tributoxysilane, alkoxytitanates, for example tetraalkoxytitanates such as tetramethoxytitanate, tetraethoxytitanate, tetrapropoxytitanate, tributoxytitanate, or, for example, trialkoxytitanates, such as trimethoxytitanate, triethoxytitanate, tripropoxytitanate, tributoxytitanate, alkoxyzirconates, for example tetraalkoxyzirconates such as tetramethoxyzirconate, tetraethoxyzirconate, tetrapropoxyzirconate, tetrabutoxyzirconate, or, for example, trialkoxyzirconates such as trimethoxyzirconate, triethoxyzirconate, tripropoxyzirconate, tributoxyzirconate, silica sols, amphiphilic substances, copper, graphite, ascorbyl palmitate, expanded natural graphite (ENG), silicon carbide, polysaccharides, fatty acids, alcyl silicon resins, metal-organic framework materials, where the metal-organic framework has a layer composition, or mixtures thereof.

Preferred binder, lubricants or additives are graphite, stearic acid, magnesium stearate, copper platelets, silicon carbide, expanded natural graphite (ENG), ascorbyl palmitate, polysaccharides, for example commercially available as Zusoplast PS1 from Zschimmer & Schwarz Chemie GmbH, polyethylene oxide (PEO), aluminium oxide, for example commercially available as Pural SB or mixtures thereof. Most preferred lubricants are polysaccharides such as Zusoplast PS1, polyethylene oxide (PEO), for example commercially available as PEO E160 from Sigma-Aldrich, or mixtures thereof.

Suitable binders are for example commercially available under trade names like Pural® SB (aluminum oxide), Ludox® AS 40 (colloidal silica), or Silres® MSE100 (methyl and methoxy groups containing polysiloxane).

Further additives which can be used are, inter alia, amines or amine derivatives such as tetraalkylammonium compounds or amino alcohols and carbonate-comprising compounds, e.g. calcium carbonate. Such further additives are described, for instance, in EP 0 389 041 A1, EP 0 200 260 A1 or WO 95/19222. Further, pore-forming agents such as organic polymers, preferably methylcellulose, or mixtures thereof can be added.

It was found that typical binders such as those applied for the extrusion of zeolites (e.g. aluminum oxide, clays such as e.g. kaolin, attapulgite, bentonite, silicium dioxide, compare DE 1 905 019, DE 2 117 479, US 1 332 847) interact well with the partially organic MOFs yielding mechanically stable shaped bodies with appropriate strength. The expert in the field would expect a change to an at least partially organic binder to be required, as materials with similar polarities are known to interact best with each other. Compare e.g. the basic observation that hydrophile water and hydrophobic oil do not mix. The hardness of the extrudates obtained according to the invention can reach surprisingly high values at least comparable to those of zeolites (e.g. EP 1 467 811, DE 2 117 479), even though partially organic MOFs do not allow for calcination after the shaping stage. Zeolites in comparison require high calcination temperatures (a few hundred °C) to yield extrudates of sufficient hardness (e.g. EP 1 467 811). MOFs, however, decompose at these high temperatures due to the organic units being burnt. Surprisingly, thermal treatment at considerably reduced temperatures (e.g. 200 °C) yields shaped bodies with appropriate hardness.

Further, these conventional binders do not block the highly porous MOF structures that do exhibit up to the 20-fold surface area compared to zeolites. This high surface area is the prerequisite for MOFs' superior performance in applications such as the storage of natural gas. Preserving the surface area as best as possible in the extrusion process is therefore mandatory. Due to the high surface areas of the extrudates obtained according to the invention they do show high methane uptake.

In addition, organic viscosity-enhancing substances and/or hydrophilic polymers, e.g. cellulose or polyacrylates may be used. The organic viscosity-enhancing substance used may likewise be any substance suitable for this purpose. Those preferred are in particular hydrophilic polymers, e.g., cellulose, starch, polyacrylates, polymethacrylates, polyvinyl alcohol, polyvinylpyrrolidone, polyisobutene and polytetrahydrofuran. These substances primarily promote the formation of a plastic material during the kneading, molding and/or an optional drying step by bridging the primary particles and moreover ensuring the mechanical stability of the molding during the molding and the optional drying process.

In a preferred embodiment, the mixture comprises 1% to 10% by weight of a lubricant, referring to the sum of the initial mass of the at least bidentate organic compound and the initial mass of the metal salt.

The initial mass is generally the mass, which is present in the mixture, before the reaction of the at least bidentate organic compound and the metal salt to the metal-organic framework material starts. And the initial mass is the total mass of all at least bidentate organic compound and metal salt, respectively, which is added to the mixture.

Most preferably, the total mass of the at least bidentate organic compound and the total mass of the metal salt is preferably added to the mixture at once. And the total mass of the solvent is preferably added at once to the mixture. In an alternative embodiment, the solvent is added stepwise to the mixture in step a₁₎.

Preferably the at least bidentate organic compound and the metal salt are mixed first and then the binder, lubricant and/or other additional substance is added, followed by the solvent.

Further, the lubricant is preferably polyethylene oxide and/or a polysaccharide.

In the preferred embodiment, wherein the metal-organic framework is Cu-1,3,5-benzenetricarboxylate, in the mixture an initial ratio of the molar amount of the metal comprised in the metal salt to the molar amount of the at least bidentate organic compound is in a range from 1.3 to 1.7, more preferably from 1.4 to 1.6, for example 1.5. The term "initial" in initial ratio is understood correspondingly to the initial mass. These initial ratios lead to an essentially stoichiometric composition of the mixture having the advantage that a reduced amount of unreacted reactants remains in the molding composition and no further separation has to be effectuated.

In another preferred embodiment, wherein the metal-organic framework is Zn-2-methylimidazolate, in the mixture an initial ratio of the molar amount of the metal comprised in the metal salt to the molar amount of the at least bidentate organic compound is in a range from 0.3 to 0.8, more preferably from 0.4 to 0.6, for example 0.5.

In a particularly preferred embodiment the metal ion and the at least bidentate organic compound are used in stoichiometric amounts in regard to the metal-organic framework to be formed, i. e. no excess of the metal ion or the least bidentate organic compound is used. The actual molar ratio of metal ion and the organic compound in this case depends on the nature of the starting materials, particularly the charge of the metal ion and the number of coordination sites of the organic compound.

By way of examples said matter should be clarified: For example, when the MOF to be prepared in the inventive process is Cu-1,3,5-benzenetricarboxylate the preferred molar ratio of the metal ion - Cu²⁺ - and the at least bidentate organic compound - benzene-1,3,5-tricarboxylic acid - is 3 : 2. When the MOF prepared in the inventive process is Zn-2-methyimidazolate the preferred molar ratio of Zn²⁺ and 2-methylimidazole is 1 : 2.

In a preferred embodiment, step a₂) is carried out at a temperature in the range 15°C to 70°C, more preferably 15°C to 50°C. Preferably, no external heating of the mixture is carried out.

WO-A-03/102000 describes in general terms the conversion of metal-organic framework powder into shaped bodies like pellets with a resistance to pressure in the range from 2 N to 100 N. In an example pellets which have a resistance to pressure of 10 N are made by means of eccentric press.

In the context of the present invention, the term "shaped body" refers to any solid body that has at least a two-dimensional outer contour and extends to at least 0.02 mm in at least one direction in space. No other restrictions apply, i.e., the body may take any conceivable shape and may extend in any direction by any length so long as it extends to at least 0.02 mm in one direction. In a preferred embodiment, the shaped bodies do not extend to more than 50 mm and not to less than 0.02 mm in all directions. In a further preferred embodiment, this range is limited from 1.5 mm to 5 mm.

Generally, as far as the geometry of shaped bodies is concerned, spherical or cylindrical bodies are preferred, as well as disk-shaped pellets or any other suitable geometry, such as honeycombs, meshes, hollow bodies, wire arrangements etc.

The shaped bodies are solid bodies, wherein the metal-organic framework material is preferably distributed homogeneously over the whole shaped body. Typically, also the porosity is homogeneous over the shaped bodies.

Generally, the term "molding" refers to any process known to the expert in the field by which a substance that does not fulfill the above-mentioned requirement of a shaped body, i.e. any powder, powdery substance, array of crystallites etc., can be formed into a shaped body that is stable under the conditions of its intended use.

The extrusion is effected in conventional extruders for example such that result in extrudates having a diameter of, usually, from about 1 to about 10 mm, in particular from about 1 to about 5 mm. Such extrusion apparatuses are described, for example, in Ullmann's Enzyklopädie der Technischen Chemie, 4th Edition, Vol. 2, p. 295 et seq., 1972. Alternatively to the use of an extruder, an extrusion press is preferably used for extrusion.

The extrusion can be performed at elevated pressure (ranging from atmospheric pressure to several 100 bar), at elevated temperatures (ranging from room temperature to 300 °C) or in a protective atmosphere (noble gases, nitrogen or mixtures thereof). Any combinations of these conditions are possible as well.

Typically, the pressure in the extruder or extrusion press is in a range from 50 bar to 250 bar, preferably from 50 bar to 150 bar.

In a preferred embodiment, the molding composition is not filtered before being fed into the extruder or the extrusion press. Further, the molding composition is preferably not dried before being fed into the extruder or the extrusion press. And the molding composition is preferably not washed before being fed into the extruder or the extrusion press. In a further preferred embodiment, the molding composition is not filtered, not washed and not dried before being fed into the extruder or the extrusion press. In a most preferred embodiment, step a) comprising step a₁) and step a₂), is directly followed by step b).

Preferably, the residence time in step a) counting from the reaction start to the feeding of the molding composition into the extruder and/or the extrusion press is preferably in a range from 20 minutes to 75 minutes, more preferably from 30 minutes to 45 minutes.

It is a further advantage of the inventive process that the obtained extrudates show similarly methane uptake compared to extrudates from conventional synthesis, wherein the metal-organic framework material is firstly crystallized in a reactor followed by filtering and washing, for example on a filter nutsche or filter press, and drying of the powder before extrusion.

Typically, the molding composition comprises 30 % to 60 % by weight, preferably 45 % to 55 % by weight of the metal-organic framework material, when being fed into the extruder or the extrusion press, referring to the total mass of the molding composition.

Preferably, the molding composition is conveyed only once through the extruder or extrusion press.

Most, if not all, of the additive substances mentioned above may be removed from the shaped bodies by drying or heating, optionally in a protective atmosphere or under vacuum. In order to keep the MOF material intact, the shaped bodies are preferably not exposed to temperatures exceeding 300 °C. However, studies show that heating and/or drying under the aforementioned mild conditions, in particular drying in vacuum, preferably well below 300 °C is sufficient to at least remove organic compounds and water out of the pores of the MOF material. Generally, the conditions are adapted and chosen depending upon the additive substances used.

The shaped bodies obtained after molding can be subjected to a drying step and/or activation step, which is generally carried out at a temperature in the range from 80 to 250°C, preferably in the range from 80 to 150°C at one or more temperature levels. Preferably, the shaped bodies are dried at a drying temperature in a range from 80°C to 250°C. Preferably, the drying and/or activation is carried out under reduced pressure or under a protective gas atmosphere, comprising nitrogen.

Preferably, compounds added as additives are at least partly removed from the shaped bodies during this drying process.

Typically, the molding composition is converted into shaped bodies by being conveyed through the extruder or the extrusion press resulting in a string, which is cut or broken into individual shaped bodies.

Depending on the reactants and the molding procedure, the shaped bodies preferably have a specific surface area of at least 500 m²/g, more preferably at least 600 m²/g, still more preferably at least 700 m²/g, in particular preferably at least 800 m²/g.

In a particularly preferred embodiment, the shaped bodies have a specific surface area per mass of at least 1000 m²/g determined according to BET (DIN ISO 9277:2003-05) by N₂ adsorption at 77 K, preferably between 900 m²/g and 5000 m²/g, depending on the selection of the metal-organic framework material.

In a preferred embodiment, the shaped bodies have a resistance to pressure in the range from 2 N to 1000 N, preferably between 15 N and 100 N.

The resistance to pressure, also called cutting strength or side cutting strength, is defined within the meaning of the present invention as resistance to lateral pressure and can be measured with a hardness grading device by Zwick. The resistance to pressure can be measured on an apparatus from Zwick (model: BZ2.5/TS1S) according to DIN EN ISO 9001:2008.

The shaped bodies resulting from the processes according to the present invention can be applied for sorption of at least one liquid or gas for storage of at least one liquid or gas, for separation, as catalyst, as support, as desiccant, as ion exchanger material, as molecular sieve, as material for chromatography, as material for selective release and/or uptaking of molecules, as material for molecular recognition, as material for nanotubes and/or as material for nano-reactors. In a preferred embodiment, the shaped bodies produced according to the invention are used for the storage of gas, which is selected from the group consisting of natural gas, shale gas, town gas, methane, ethane, butane, hydrogen, propane, propene, ethylene, carbon dioxide, water and combinations thereof. In a particularly preferred embodiment the shaped bodies are used for the storage of a gas comprising methane and/or hydrogen.

Further gases storable by means of the shaped bodies are acetylene, nitrogen oxides, oxygen, sulfur oxides, halogens, halogenated hydrocarbons, NF₃, SF₆, ammonia, hydrogen sulfide, ammonia, formaldehyde, noble gases, in particular helium, neon, argon, krypton and xenon.

For the purposes of the present invention, the terms "gas" and "liquid" are used in the interests of simplicity, but gas mixtures and liquid mixtures or liquid solutions are likewise encompassed by the term "gas" or "liquid".

If the shaped bodies of the invention are used for storage, this is preferably carried out in a temperature range from -200°C to +80°C. A temperature range from -80°C to +80°C is more preferred. A preferred pressure range is from 1 bar to 1000 bar (absolute), more preferably from 1 bar to 700 bar, particularly preferably from 1 bar to 300 bar and most preferably from 2 bar to 250 bar.

Processes for storage by means of shaped bodies produced according to the present invention can be used as for example known for shaped bodies of metal-organic frameworks. In general, these are described in WO-A 2005/003622, WO-A 2003/064030, WO-A 2005/049484, WO-A 2006/089908 and DE-A 10 2005 012 087.

Processes for separation or purification by means of shaped bodies produced according to the present invention can be used as for example known for shaped bodies of metal-organic frameworks. In general these are described in EP-A 1 674 555, DE-A 10 2005 000938 and DE-A 10 2005 022 844. A gas which is preferably separated off is carbon dioxide, in particular from a gas mixture which further comprises carbon monoxide. Other gases or volatile components which are preferably separated off are sulfur-based impurities in natural gas or shale gas like hydrogen sulfide or carbonyl sulfide.

However, the shaped bodies can also be used for taking up a liquid for its storage, separation, controlled release and/or chemical reaction. Examples of such a liquid are disinfectants, inorganic or organic solvents, fuels, in particular gasoline or diesel, hydraulic liquid, coolant liquid, brake fluid or oil, in particular machine oil. In addition, the liquid can be halogenated aliphatic or aromatic, cyclic or acyclic hydrocarbons or mixtures thereof. In particular, the liquid can be acetone, acetonitrile, aniline, anisole, benzene, benzonitrile, bromobenzene, butanol, tert-butanol, quinoline, chlorobenzene, chloroform, cyclohexane, diethylene glycol, diethyl ether, dimethylacetamide, dimethylformamide, dimethylsulfoxide, dioxane, glacial acetic acid, acetic anhydride, ethyl acetate, ethanol, ethylene carbonate, ethylene dichloride, ethylene glycol, ethylene glycol dimethyl ether, formamide, hexane, isopropanol, methanol, methoxypropanol, 3-methyl-1-butanol, methylene chloride, methyl ethyl ketone, N-methylformamide, N-methylpyrrolidone, nitrobenzene, nitromethane, piperidine, propanol, propylene carbonate, pyrridine, carbon disulfide, sulfolane, tetrachloroethene, carbon tetrachloride, tetrahydrofuran, toluene, 1,1,1-trichloroethane, trichloroethylene, triethylamine, triethylene glycol, triglyme, water or mixtures thereof.

In addition, the shaped bodies can also be used for taking up an odor substance. Preferably, the odor substance is a volatile organic or inorganic compound which comprises at least one of the elements nitrogen, phosphorus, oxygen, sulfur, fluorine, chlorine, bromine or iodine or is an unsaturated or aromatic hydrocarbon or a saturated or unsaturated aldehyde or a ketone. More preferred elements are nitrogen, oxygen, phosphorus, sulfur, chlorine, bromine; in particular preference is given to nitrogen, oxygen, phosphorus and sulfur.

In the context of the present invention, a volatile odor substance preferably has a boiling point or boiling range of below 300°C. More preferably, the odor substance is a readily volatile compound or mixture. In particular preferably, the odor substance has a boiling point or boiling range of below 250°C, more preferably below 230°C, in particular preferably below 200°C.

Examples in which a chemical reaction can take place in the presence of metal-organic framework material are the alkoxylation of monools and also of polyols. The procedure of such alkoxylations is described in WO-A 03/035717 and also WO-A 2005/03069. Likewise, the shaped bodies can be used for epoxidation and also for production of polyalkylene carbonates and hydrogen peroxide. Such reactions are described in WO-A 03/101975, WO-A 2004/037895 and also US-A 2004/081611.

Particular preference is given to the use in vehicles. The term 'vehicle' includes but shall not be limited to cars, trucks, ships, airplanes, motorcycles, threewheelers and the like.

Applications in adsorptive gas systems as adsorbed natural gas (ANG) tanks, gas separation and gas scrubbing are particularly preferred.

The present invention is illustrated by means of the figures and examples below

### Brief description of the figures:

Figure 1 shows the XRD diffractogram of comparative example 1.
Figure 2 refers to the XRD diffractogram of comparative example 2.
Figure 3 shows the XRD diffractogram of comparative example 3.
Figure 4 shows the XRD diffractogram of example 1.
Figure 5 shows the XRD diffractogram of example 2.
Figure 6 relates the XRD diffractogram of example 4.
Figure 7 shows the XRD diffractogram of example 5.
Figure 8 refers to the XRD diffractogram of example 6.

### Examples and comparative examples

### Comparative examples 1 to 4 (CE1 to CE4) and examples 1 to 4 (E1 to E4)

201.2 g benzene-1,3,5-tricarboxylic acid (BTC) and 145.5 g copper hydroxide where mixed for 10 minutes in a mix muller from Simpson Technologies. The BTC was applied with a purity of 98 % and the copper hydroxide was applied with a purity of 95 %. The initial ratio of the molar amount of copper to the molar amount of BTC was generally 1.51. For comparative example 2, 165.2 g copper hydroxide were applied and the initial ratio of the molar amount of copper to the molar amount of BTC was 1.71

Then, at least one lubricant was added and the mixture was additionally mixed for 5 minutes. As lubricant, the polysaccharide Zusoplast PS1 or Zusoplast PS1 and the polyethylene oxide PEO E160, respectively,was applied. Subsequently, varying amounts of a solvent with a varying composition, consisting of ethanol and water, were added to the solid mixture, followed by an additional mixing time of at least 30 minutes.

The resulting molding composition was fed into an extrusion press, 8MP Modul 40 from RexRoth, and extrudates with a diameter of 3.5 mm were produced at a pressure between 35 bar and 150 bar.

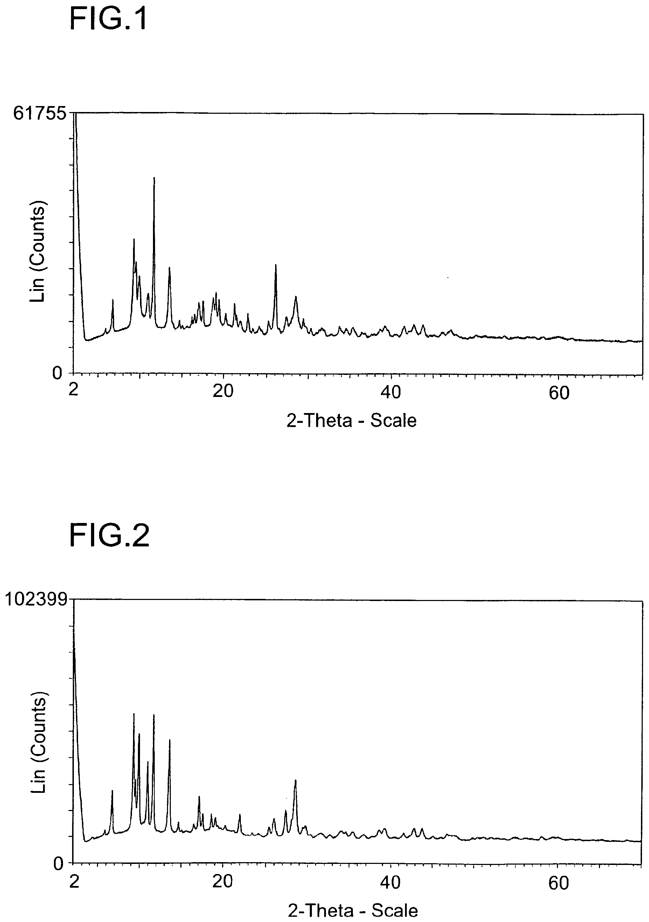

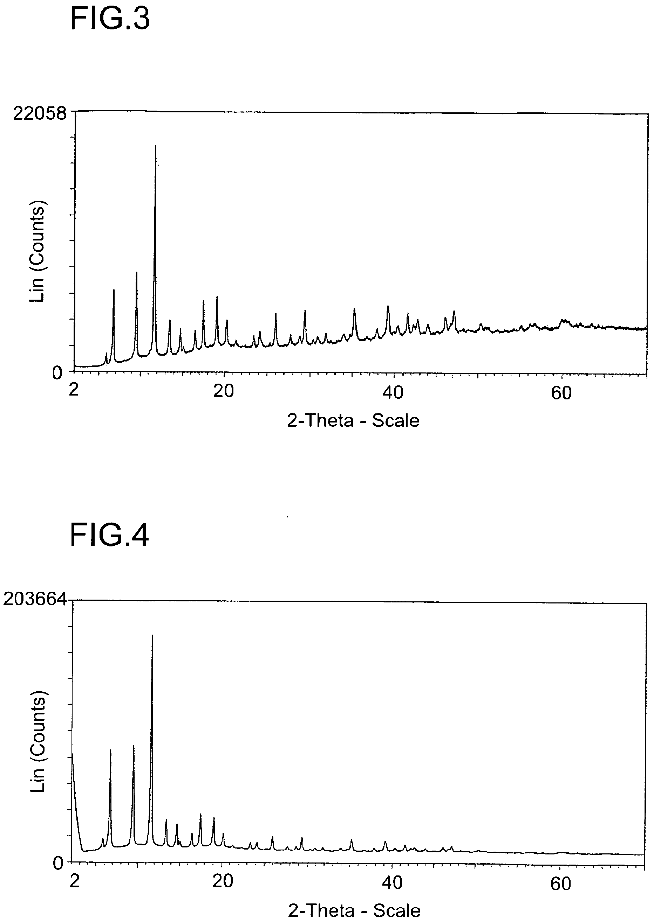

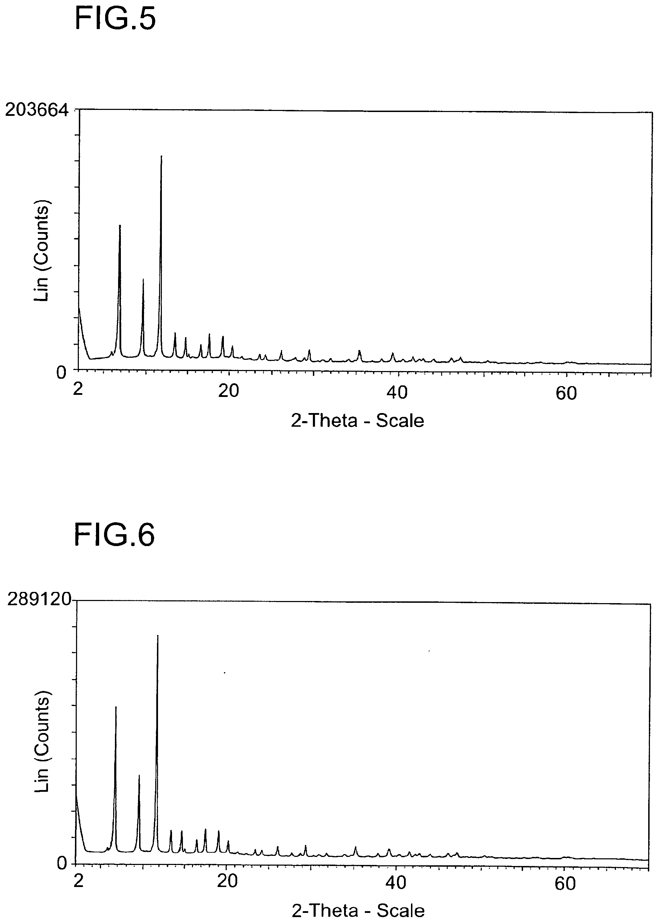

The resulting extrudates were dried for 16 hours at 120 °C and then measured by x-ray diffractometry (XRD, Fig. 1 to Fig. 6). The specific surface area was measured according to BET (DIN ISO 9277:2003-05).

A measurement of the cutting hardness was carried out as described in the earlier German patent application no. 103261137.0 of June 6, 2003 (BASF AG): The cutting hardnesses were measured according to DIN EN ISO 9001:2008 on an apparatus from Zwick (model: BZ2.5/TS1S; initial loading: 0.5 N, preliminary advance rate: 10 mm/min; test speed: 1.6 mm/min) and are the means of in each case 10 measured catalyst extrudates. In detail, the cutting hardness was determined as follows: Extrudates were loaded with increasing force by means of a cutter having a thickness of 0.3 mm until the extrudate had been cut through. The force required for this is the cutting hardness in N (Newton). The determination was carried out on a testing apparatus from Zwick, Ulm, having a rotating plate in a fixed position and a freely movable, vertical punch with built-in cutter having a thickness of 0.3 mm. The movable punch with the cutter was connected to a load cell to record the force and during the measurement moved towards the rotating plate on which the extrudate to be measured was located. The test apparatus was controlled via a computer which recorded and evaluated the measurement results. 10 straight, preferably crack-free extrudates were taken from a well-mixed sample and their cutting hardnesses were determined and subsequently averaged.

Tamped densities of extrudate packings were determined using a jolting volumeter type STAV II from J. Engelsmann AG. The machine has been tested according to DIN ISO 787 (Part 11 of 1995) by the manufacturer. A weighed amount of the respective sample was put into a 1000 or 100 mL scaled cylinder. After tapping the cylinder 3000 times, the resulting volume of the packing was determined and the density calculated by dividing sample weight by sample volume.

### Example 5.1 (E5.1)

Example 5.1 was carried out according to the procedure as described for comparative examples 1 to 4 and examples 1 to 4 with the difference that the extrudates were produced in a larger scale. 2260 g benzene-1,3,5-tricarboxylic acid (BTC) and 2720 g copper hydroxide where applied, resulting in an initial ratio of the molar amount of copper to the molar amount of BTC of 1.71.

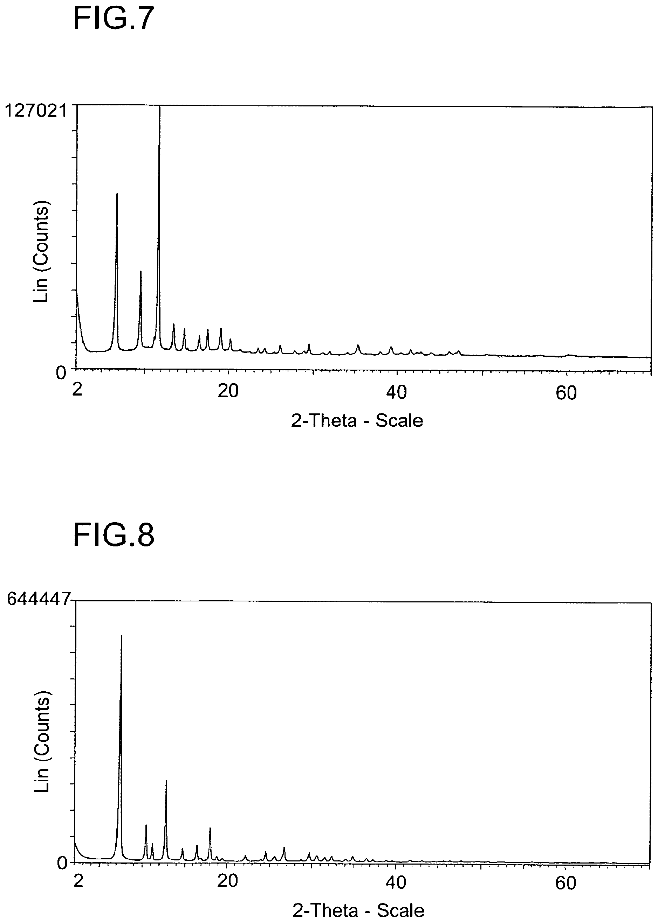

The resulting molding composition was fed into an extrusion press from Loomis for the production of extrudates with a diameter of 3.5. The resulting extrudates were measured by x-ray diffractometry (XRD, Fig. 7).

### Example 5.2 (E5.2)

Example 5.2 was carried out according to the procedure as described for example 5.1 with the difference that the resulting molding composition was fed into an extruder from Sela for the production of extrudates with a diameter of 3.5.

### Example 6 (E6)

Example 6 was carried out according to the procedure as described for comparative examples 1 to 4 and examples 1 to 4 with the difference that instead of BTC and copper hydroxide, 368.2 g 2-methylimidazole and 250 g zinc carbonate hydroxide hydrate where mixed, resulting in an initial ratio of the molar amount of zinc to the molar amount of 2-methylimidazole of 1.5.

The specific compositions of the mixture and the results of comparative examples 1 to 4 and examples 1 to 6 are summarized in table 1. The content of the lubricants is given in % by weight, referring to the sum of the initial mass of BTC and the initial mass of copper hydroxide and the sum of the initial mass of 2-methylimidazole and zinc carbonate hydroxide hydrate, respectively, and the solid content refers to the total mass of the molding composition. Stable extrudates are understood to be cut or broken from continuous strands, providing a constant diameter, which were produced by the extruder or extrusion press. The stable extrudates further possessed a homogeneous distribution of cutting strength.

The extrudates were measured by X-ray diffractometry (XRD, Fig. 8).

**Table 1**

| No. | Solvent | | Solid content | Lubricant | | Tamped density | Cutting strength | BET surface area | stable extru dates |
|---|---|---|---|---|---|---|---|---|---|
| | Ethanol | Water | | Zusoplast PS1 | PEO E160 | | | | |
| | [vol.%] | [vol.%] | [wt.%] | [wt.%] | [wt.%] | [g/L] | [N] | [m²/g] | |
| CE1 | 15 | 85 | 49 | 2 | 2 | 403.3 | 27 | 422 | no |
| CE2 | 15 | 85 | 46 | 2 | 2 | 283 | 9.5 | 246 | no |
| CE3 | 67.5 | 32.5 | 51 | 2 | 2 | 340 | 28.3 | 1036 | no |
| CE4 | 80 | 20 | 55 | 2 | 2 | 380 | 23.7 | 966 | no |
| E1 | 32.5 | 67.5 | 44 | 2 | 2 | 300 | 21.2 | 1057 | yes |
| E2 | 42.5 | 57.5 | 49 | 5 | 0 | 329 | 15.9 | 1129 | yes |
| E3 | 50 | 50 | 46 | 2 | 2 | 376 | 36.8 | 951 | yes |
| E4 | 50 | 50 | 49 | 5 | 0 | 360 | 25.1 | 1089 | yes |
| E5.1 | 50 | 50 | 49 | 2 | 2 | 475 | 33 | 1013 | yes |
| E5.2 | 50 | 50 | 49 | 2 | 2 | 514 | 44 | 1022 | yes |
| E6 | 50 | 50 | 69 | 2 | 2 | 416 | 12 | 1032 | yes |

The XRD diffractograms related to comparative example 3 and to examples 1, 2 and 4 to 6 show that the metal-organic framework copper BTC was formed. For an ethanol content in the solvent of less than 20 %, a drastic decrease in the BET surface area was observed.

## Claims

1. A process for production of shaped bodies containing metal-organic framework material, the process comprising
a) preparing a molding composition, comprising the steps
a₁) preparing a mixture, the mixture comprising an at least bidentate organic compound or a salt thereof, a metal salt and a solvent, wherein the solvent comprises 25% to 60% by volume of an alcohol, selected from the group consisting of methanol, ethanol, n-propanol and isopropanol, and 40% to 75% by volume of water, and
a₂) producing the molding composition, the molding composition comprising at least a metal-organic framework material and the solvent, wherein the at least bidentate organic compound or a salt thereof and the metal salt react to the metal-organic framework material and wherein the molding composition has a solid content in a range from 30% to 80% by weight, referring to the total mass of the molding composition;
b) feeding the molding composition into an extruder or an extrusion press and
c) converting the molding composition into shaped bodies, comprising at least the metal-organic framework material, by extrusion.

2. The process according to claim 1, wherein the molding composition has a solid content in a range from 40% to 60% by weight, referring to the total mass of the molding composition.

3. The process according to claim 1 or 2, wherein the metal salt comprises a metal selected from the group consisting of Mg, Ca, Al, Y, Sc, Zr, Ti, V, Cr, Mo, Fe, Co, Cu, Ni, Zn and Ln, preferably Mg, Zr, Ni, Al, Mo, Y, Sc, Mg, Fe, Cu and Zn, more preferably Mg, Fe, Zr, Sc, Al, Cu and Zn, even more preferably Mg, Zr, Al, Cu and Zn, even more preferably copper, zinc and aluminum.

4. The process according to any of claims 1 to 3, wherein the mixture comprises comprises at least one binder and/or lubricant.

5. The process according to claim 4, wherein the mixture comprises 1% to 10% by weight of a lubricant, referring to the sum of the initial mass of the at least bidentate organic compound and the initial mass of the metal salt.

6. The process according to claim 4 or 5, wherein the lubricant is polyethylene oxide and/or a polysaccharide.

7. The process according to any of claims 1 to 6, wherein the metal salt and the at least bidentate organic compound are used in stoichiometric amounts.

8. The process according to any of claims 1 to 7, wherein step a₂) is carried out a temperature in a range from 15°C to 70°C.

9. The process according to any of claims 1 to 8, wherein the metal salt is (Cu(OH)₂ or [Zn(CO₃)]₂[Zn(OH)₂]₃.

10. The process according to any of claims 1 to 9, wherein the at least bidentate organic compound is benzene-1,3,5-tricarboxylic acid or 2-methylimidazole.

11. The process according to any of claims 1 to 10, wherein at least step a₁) is carried out in a mix muller or a kneader.

12. The process according to any of claims 1 to 11, wherein the molding composition is not filtered before being fed into the extruder or the extrusion press.

13. The process according to any of claims 1 to 12, wherein the molding composition is not dried before being fed into the extruder or the extrusion press.

14. The process according to any of claims 1 to 13, the shaped bodies are dried at a drying temperature in a range from 80°C to 250°C.

15. The process according to any of claims 1 to 14, wherein the molding composition comprises 30% to 60% by weight of the metal-organic framework material, when being fed into the extruder or extrusion press, referring to the total mass of the molding composition.

## Patentansprüche

1. Verfahren zur Herstellung von Formkörpern, die metallorganisches Gerüstmaterial enthalten, wobei das Verfahren Folgendes umfasst:
a) Herstellen einer Formmasse, das folgende Schritte umfasst:
a₁) Herstellen einer Mischung, wobei die Mischung mindestens eine zweizähnige organische Verbindung oder ein Salz davon, ein Metallsalz und ein Lösungsmittel umfasst, wobei das Lösungsmittel 25 bis 60 Vol.-% eines Alkohols aus der Gruppe bestehend aus Methanol, Ethanol, n-Propanol und Isopropanol und 40 bis 75 Vol.-% Wasser umfasst, und
a₂) Herstellen der Formmasse, wobei die Formmasse mindestens ein metallorganisches Gerüstmaterial und das Lösungsmittel umfasst, wobei die mindestens zweizähnige organische Verbindung oder ein Salz davon und das Metallsalz zu dem metallorganischen Gerüstmaterial reagieren und wobei die Formmasse einen Feststoffgehalt im Bereich von 30 bis 80 Gew.-%, bezogen auf die Gesamtmasse der Formmasse, aufweist;
b) Einspeisen der Formmasse in einen Extruder oder eine Strangpresse und
c) Umwandeln der Formmasse in Formkörper, die mindestens ein metallorganisches Gerüstmaterial umfassen, durch Extrusion.

2. Verfahren nach Anspruch 1, wobei die Formmasse einen Feststoffgehalt im Bereich von 40 bis 60 Gew.-%, bezogen auf die Gesamtmasse der Formmasse, aufweist.

3. Verfahren nach Anspruch 1 oder 2, wobei das Metallsalz ein Metall aus der Gruppe bestehend aus Mg, Ca, Al, Y, Sc, Zr, Ti, V, Cr, Mo, Fe, Co, Cu, Ni, Zn und Ln, vorzugsweise Mg, Zr, Ni, Al, Mo, Y, Sc, Mg, Fe, Cu und Zn, weiter bevorzugt Mg, Fe, Zr, Sc, Al, Cu und Zn, noch weiter bevorzugt Mg, Zr, Al, Cu und Zn, noch weiter bevorzugt Kupfer, Zink und Aluminium, umfasst.

4. Verfahren nach einem der Ansprüche 1 bis 3, wobei die Mischung mindestens ein Bindemittel und/oder mindestens ein Schmiermittel umfasst.

5. Verfahren nach Anspruch 4, wobei die Mischung 1 bis 10 Gew.-% eines Schmiermittels, bezogen auf die Summe der Anfangsmasse der mindestens einen zweizähnigen organischen Verbindung und der Anfangsmasse des Metallsalzes, umfasst.

6. Verfahren nach Anspruch 4 oder 5, wobei es sich bei dem Schmiermittel um Polyethylenoxid und/oder ein Polysaccharid handelt.

7. Verfahren nach einem der Ansprüche 1 bis 6, wobei das Metallsalz und die mindestens zweizähnige organische Verbindung in stöchiometrischen Mengen verwendet werden.

8. Verfahren nach einem der Ansprüche 1 bis 7, wobei Schritt a₂) bei einer Temperatur im Bereich von 15 °C bis 70 °C durchgeführt wird.

9. Verfahren nach einem der Ansprüche 1 bis 8, wobei es sich bei dem Metallsalz um Cu(OH)₂ oder [Zn(CO₃)]₂[Zn(OH)₂]₃ handelt.

10. Verfahren nach einem der Ansprüche 1 bis 9, wobei es sich bei der mindestens zweizähnigen organischen Verbindung um Benzol-1,3,5-tricarbonsäure oder 2-Methylimidazol handelt.

11. Verfahren nach einem der Ansprüche 1 bis 10, wobei mindestens Schritt a₁) in einem Mix-Muller oder einem Kneter durchgeführt wird.

12. Verfahren nach einem der Ansprüche 1 bis 11, wobei die Formmasse vor der Einspeisung in den Extruder oder die Strangpresse nicht filtriert wird.

13. Verfahren nach einem der Ansprüche 1 bis 12, wobei die Formmasse vor der Einspeisung in den Extruder oder die Strangpresse nicht getrocknet wird.

14. Verfahren nach einem der Ansprüche 1 bis 13, wobei die Formkörper bei einer Trocknungstemperatur im Bereich von 80 °C bis 250 °C getrocknet werden.

15. Verfahren nach einem der Ansprüche 1 bis 14, wobei die Formmasse bei der Einspeisung in den Extruder oder die Strangpresse 30 bis 60 Gew.-% des metallorganischen Gerüstmaterials, bezogen auf die Gesamtmasse der Formmasse, umfasst.

## Revendications

1. Procédé de production de corps formés contenant un matériau de charpente métallo-organique, le procédé comprenant
a) la préparation d'une composition de moulage, comprenant les étapes de
a₁) préparation d'un mélange, le mélange comprenant un composé organique au moins bidentate ou un sel de celui-ci, un sel métallique et un solvant, dans lequel le solvant comprend 25 % à 60 % en volume d'un alcool, choisi dans le groupe constitué du méthanol, de l'éthanol, du n-propanol et de l'isopropanol, et 40 % à 75 % en volume d'eau, et
a₂) production de la composition de moulage, la composition de moulage comprenant au moins un matériau de charpente métallo-organique et le solvant, dans lequel le composé organique au moins bidentate ou un sel de celui-ci et le sel métallique réagissent avec le matériau de charpente métallo-organique et dans lequel la composition de moulage a une teneur en matières solides dans une plage de 30 % à 80 % en poids, par rapport à la masse totale de la composition de moulage ;
b) introduction de la composition de moulage dans une extrudeuse ou une presse d'extrusion et
c) conversion de la composition de moulage en corps formés, comprenant au moins le matériau de charpente métallo-organique, par extrusion.

2. Procédé selon la revendication 1, dans lequel la composition de moulage a une teneur en matières solides dans une plage de 40 % à 60 % en poids, par rapport à la masse totale de la composition de moulage.

3. Procédé selon la revendication 1 ou 2, dans lequel le sel métallique comprend un métal choisi dans le groupe constitué de Mg, Ca, Al, Y, Sc, Zr, Ti, V, Cr, Mo, Fe, Co, Cu, Ni, Zn et Ln, de préférence Mg, Zr, Ni, Al, Mo, Y, Sc, Mg, Fe, Cu et Zn, plus préférablement Mg, Fe, Zr, Sc, Al, Cu et Zn, encore plus préférablement Mg, Zr, Al, Cu et Zn, encore plus préférablement le cuivre, le zinc et l'aluminium.

4. Procédé selon l'une quelconque des revendications 1 à 3, dans lequel le mélange comprend au moins un liant et/ou un lubrifiant.

5. Procédé selon la revendication 4, dans lequel le mélange comprend 1 % à 10 % en poids d'un lubrifiant, par rapport à la somme de la masse initiale du composé organique au moins bidentate et la masse initiale du sel métallique.

6. Procédé selon la revendication 4 ou 5, dans lequel le lubrifiant est le poly(oxyde d'éthylène) et/ou un polysaccharide.

7. Procédé selon l'une quelconque des revendications 1 à 6, dans lequel le sel métallique et le composé organique au moins bidentate sont utilisés dans des quantités stoechiométriques.

8. Procédé selon l'une quelconque des revendications 1 à 7, dans lequel l'étape a₂) est conduite à une température dans une plage de 15 °C à 70 °C.

9. Procédé selon l'une quelconque des revendications 1 à 8, dans lequel le sel métallique est (Cu(OH)₂ ou [Zn(CO₃)]₂[Zn(OH)₂]₃.

10. Procédé selon l'une quelconque des revendications 1 à 9, dans lequel le composé organique au moins bidentate est l'acide benzène-1,3,5-tricarboxylique ou le 2-méthylimidazole.

11. Procédé selon l'une quelconque des revendications 1 à 10, dans lequel au moins l'étape a₁) est conduite dans un mélangeur à meule ou un malaxeur.

12. Procédé selon l'une quelconque des revendications 1 à 11, dans lequel la composition de moulage n'est pas filtrée avant d'être introduite dans l'extrudeuse ou la presse d'extrusion.

13. Procédé selon l'une quelconque des revendications 1 à 12, dans lequel la composition de moulage n'est pas séchée avant d'être introduite dans l'extrudeuse ou la presse d'extrusion.

14. Procédé selon l'une quelconque des revendications 1 à 13, dans lequel les corps formés sont séchés à une température de séchage dans une plage de 80 °C à 250 °C.

15. Procédé selon l'une quelconque des revendications 1 à 14, dans lequel la composition de moulage comprend 30 % à 60 % en poids du matériau de charpente métallo-organique, lorsqu'elle est introduite dans l'extrudeuse ou la presse d'extrusion, par rapport à la masse totale de la composition de moulage.
